# EUROPEAN PATENT APPLICATION

(11) **EP 4 761 072 A1**
(43) Date of publication of application: **17.06.2026**
(21) Application number: 24890189.4
(22) Date of filing: 30.07.2024
(51) Int. Cl.: H02K 5/16, H02K 5/173, H02K 7/00, H02K 7/08, H02K 37/00

(54) **STEPPER ELECTRIC MOTOR**

(30) Priority: 13.11.2023 CN 202323055067 U
(71) Applicant: Moons' Electric (Taicang) Co., Ltd., Suzhou, Jiangsu 215434 (CN)
(72) Inventor: PENG, Guangming, Suzhou, Jiangsu 215434 (CN); WEI, Bing, Suzhou, Jiangsu 215434 (CN); JI, Chenghao, Suzhou, Jiangsu 215434 (CN); ZHANG, Sen, Suzhou, Jiangsu 215434 (CN)
(74) Representative: Winter, Brandl - Partnerschaft mbB
(86) International application number: PCT/CN2024/108504
(87) International publication number: WO 2025/102825

(57) **Abstract**

The present invention relates to a stepper motor. The stepper motor includes a motor front end cover, a motor rear end cover, a motor stator core, a motor front rotor core, a motor rear rotor core, a motor front bearing, a motor rear bearing, a magnetic encoder magnet, and a motor shaft, where a magnetic encoder magnet base for fixing the magnetic encoder magnet is mounted at a rear end of the motor shaft, a wave washer is disposed between the motor rear bearing and the motor rear end cover, and the motor front bearing is fixed by a step structure formed between the motor front end cover and the motor shaft. Compared with the prior art, the present invention has advantages of greatly improving ability of the motor to resist axial displacement caused by axial impact, and preventing the motor from axial displacement failure caused by axial impact.

## Description

### TECHNICAL FIELD

The present invention relates to a motor, and more particularly to a stepper motor.

### BACKGROUND OF THE INVENTION

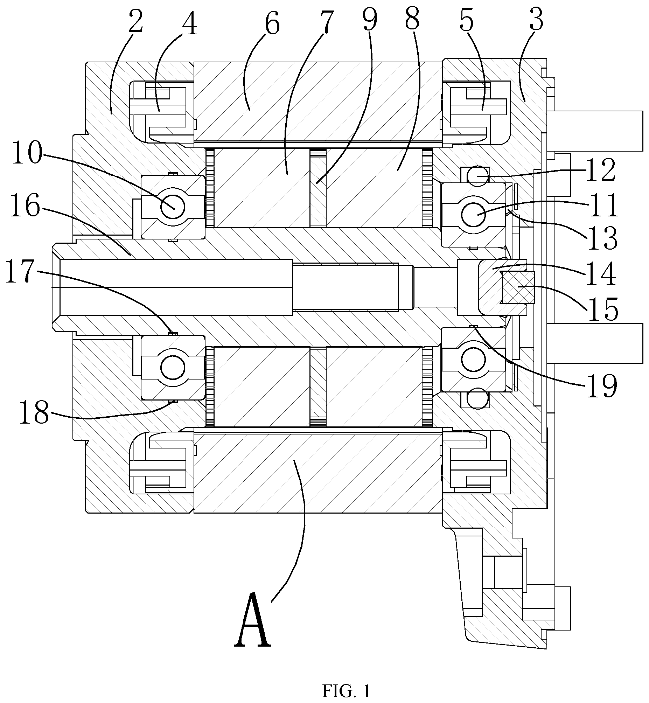

As shown in FIG. 1, an existing stepper motor includes a motor front end cover 2, a motor rear end cover 3, a motor front frame 4, a motor rear frame 5, a motor stator core 6, a motor front rotor core 7, a motor rear rotor core 8, a motor magnet 9, a motor front bearing 10, a motor rear bearing 11, an O-ring 12, a wave washer 13, a magnetic encoder magnet 15, and a motor shaft 16.

A magnetic encoder magnet base 14 for fixing the magnetic encoder magnet 15 is mounted at a rear end of the motor shaft 16, and the wave washer 13 is disposed between the motor rear bearing 11 and the motor rear end cover 3.

The function of the wave washer 13 is to apply a specific preload to a bearing, eliminate the axial clearance of the bearing, and ensure that the bearing operates in an appropriate state. Meanwhile, the wave washer also balances the axial force exerted to an output shaft of the motor.

For the same purpose, an adhesive storage tank 17 on a motor front bearing shaft, an adhesive storage tank 18 on a front end cover of the motor front bearing, and an adhesive storage tank 19 on a motor rear bearing shaft are disposed on the motor shaft and the end cover, where adhesive dispensing is used to limit the axial displacement of the bearing. However, when large axial forces in two directions (especially in a direction opposite to the output shaft) act on the output shaft of the motor, the wave washer of the motor will be flattened, resulting in a large axial displacement, which may cause failure of signals of the magnetic encoder of the motor and shutdown of the motor.

Axial displacement will cause the wave washer to be in a continuous cycle of compression and release, which may also lead to fatigue fracture of the wave washer over time and affect the service life of the motor.

Therefore, how to improve the ability of the motor to resist axial displacement caused by axial impact and prevent the motor from axial displacement failure due to axial impact has become a technical problem to be solved.

### SUMMARY

An objective of the present invention is to provide a stepper motor, in order to overcome defects of the above prior art.

The objective of the present invention can be achieved through the following technical solution:
According to one aspect of the present invention, a stepper motor is provided, and includes a motor front end cover, a motor rear end cover, a motor stator core, a motor front rotor core, a motor rear rotor core, a motor front bearing, a motor rear bearing, a magnetic encoder magnet, and a motor shaft, where a magnetic encoder magnet base for fixing the magnetic encoder magnet is mounted at a rear end of the motor shaft, a wave washer is disposed between the motor rear bearing and the motor rear end cover, and the motor front bearing is fixed by a step structure formed between the motor front end cover and the motor shaft.

As a preferred technical solution, the motor shaft is provided with a first screw thread, and the motor further includes a first locknut matched with the first screw thread, and an inner ring of the motor front bearing is fixed onto the motor shaft by the first locknut.

As a preferred technical solution, the first locknut is fixed to the motor shaft by a thread locking adhesive.

As a preferred technical solution, a second screw thread is provided in a bearing chamber of the motor front end cover, the motor further includes a second locknut matched with the second screw thread, and an outer ring of the motor front bearing is fixed onto the motor front end cover by the second locknut.

As a preferred technical solution, the second locknut is fixed to the motor front end cover by a thread locking adhesive.

As a preferred technical solution, the motor further includes a first shaft sleeve, where an outer ring of the motor front bearing is fixed to the motor front end cover by the first shaft sleeve.

As a preferred technical solution, the first shaft sleeve is fixed to the motor front end cover by an adhesive.

As a preferred technical solution, the motor further includes a second shaft sleeve, where an inner ring of the motor front bearing is fixed to the motor shaft by the second shaft sleeve.

As a preferred technical solution, the second shaft sleeve is fixed to the motor shaft by an adhesive.

Compared with the prior art, the present invention has the following advantages:
According to the present invention, two locknuts/shaft sleeves for the shaft and the end cover are designed, the motor front bearing is fixed between the front end cover and the shaft step, thereby limiting the axial displacement of the motor, greatly improving the ability of the motor to resist axial displacement caused by axial impact, and preventing the motor from axial displacement failure due to axial impact.

### BRIEF DESCRIPTION OF THE DRAWINGS

FIG. 1 is a schematic structural diagram of an existing stepper motor;
FIG. 2 is a schematic structural diagram of Embodiment 1 of the present invention; and
FIG. 3 is a schematic structural diagram of Embodiment 2 of the present invention.
A, existing stepper motor; 2, motor front end cover; 3, motor rear end cover; 4, motor front frame; 5, motor rear frame; 6, motor stator core; 7, motor front rotor core; 8, motor rear rotor core; 9, motor magnet; 10, motor front bearing; 11, motor rear bearing; 12, O-ring; 13, wave washer; 14, magnetic encoder magnet base; 15, magnetic encoder magnet;16, motor shaft; 17, adhesive storage tank on motor front bearing shaft; 18, adhesive storage tank on front end cover of motor front bearing; 19, adhesive storage tank on motor rear bearing shaft.
B: stepper motor of Embodiment 1; 20, first locknut; 21, second locknut;
C: stepper motor of Embodiment 2; 22, first shaft sleeve; 23, second shaft sleeve.

### DETAILED DESCRIPTION OF THE EMBODIMENTS

The technical solution in the embodiments of the present invention will be described clearly and completely with reference to the accompanying drawings. Apparently, the described embodiments are only some embodiments of the present invention but not all embodiments thereof. Based on the embodiments of the present disclosure, all other embodiments obtained by those of ordinary skill in the art without creative efforts shall fall within the scope of protection of the present disclosure.

### Embodiment 1

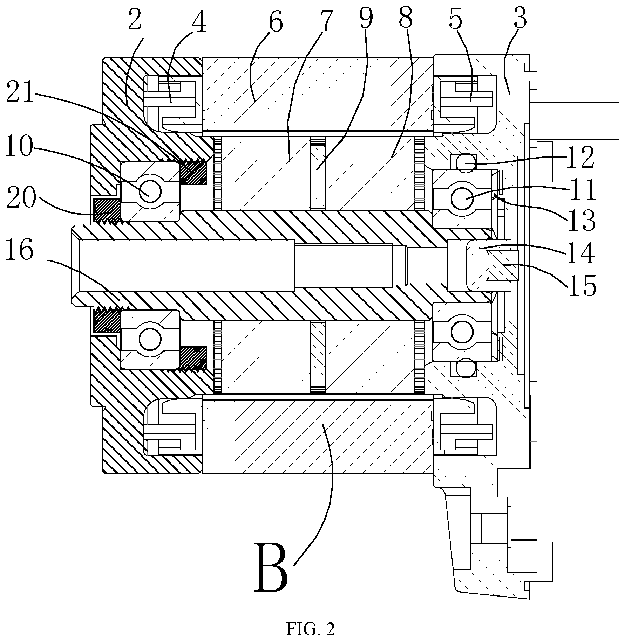

As shown in FIG. 2, the present invention provides a stepper motor, and the stepper motor includes a motor front end cover 2, a motor rear end cover 3, a motor stator core 6, a motor front rotor core 7, a motor rear rotor core 8, a motor front bearing 10, a motor rear bearing 11, a magnetic encoder magnet 15, and a motor shaft 16, where a magnetic encoder magnet base 14 for fixing the magnetic encoder magnet 15 is mounted at a rear end of the motor shaft 16, a wave washer 13 is disposed between the motor rear bearing 11 and the motor rear end cover 3, and the motor front bearing 10 is fixed by a step structure formed between the motor front end cover 2 and the motor shaft 16.

The motor shaft 16 is provided with a first screw thread, and the motor further includes a first locknut 20 matched with the first screw thread, an inner ring of the motor front bearing 10 is fixed onto the motor shaft 16 by the first locknut 20, and a step is disposed on the other side of the motor shaft. A second screw thread is provided in a bearing chamber of the motor front end cover 2, the motor further includes a second locknut matched with the second screw thread 21, and an outer ring of the motor front bearing 10 is fixed onto the motor front end cover 2 by the second locknut 21.

The first locknut 20 is fixed to the motor shaft 16 by a thread locking adhesive. The second locknut 21 is fixed to the motor front end cover 2 by a thread locking adhesive.

The motor front bearing is fixed between a front end cover bearing chamber and the step of an output shaft by the two locknuts. The axial force borne by the output shaft of the motor will be exerted to the locknuts. The locknuts are fixed by the thread locking adhesive, which improves the reliability of the motor in resisting axial impact force, avoids encoder failure caused by an axial position, and enhances the reliability of the motor.

### Embodiment 2

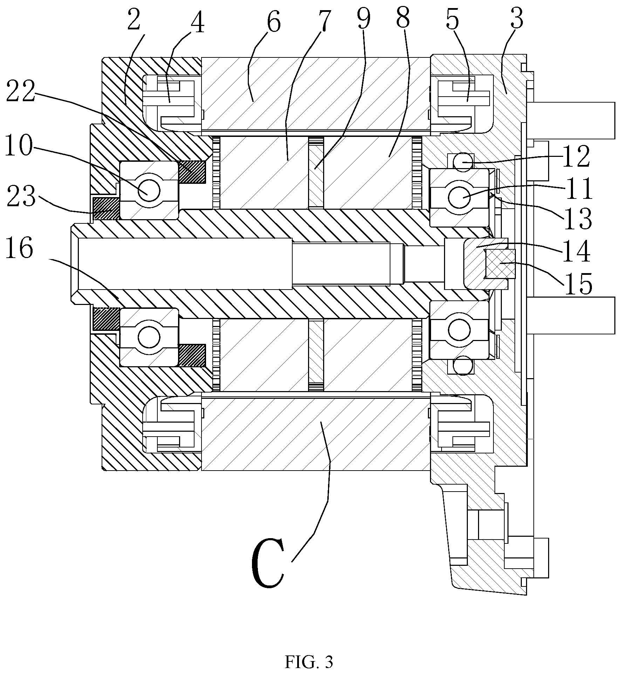

As shown in FIG. 3, the present invention provides a stepper motor, and the stepper motor includes a motor front end cover 2, a motor rear end cover 3, a motor stator core 6, a motor front rotor core 7, a motor rear rotor core 8, a motor front bearing 10, a motor rear bearing 11, a magnetic encoder magnet 15, and a motor shaft 16, where a magnetic encoder magnet base 14 for fixing the magnetic encoder magnet 15 is mounted at a rear end of the motor shaft 16, a wave washer 13 is disposed between the motor rear bearing 11 and the motor rear end cover 3, and the motor front bearing 10 is fixed by a step structure formed between the motor front end cover 2 and the motor shaft 16.

The motor further includes a first shaft sleeve 22 and a second shaft sleeve 23, an outer ring of the motor front bearing 10 is fixed to the motor front end cover 2 by the first shaft sleeve 22, and an inner ring of the motor front bearing 10 is fixed to the motor shaft 16 by the second shaft sleeve 23.

The first shaft sleeve 22 is fixed to the motor front end cover 2 by an adhesive. The second shaft sleeve 23 is fixed to the motor shaft 16 by an adhesive.

The motor front bearing is fixed between a front end cover bearing chamber and the step of an output shaft by the two shaft sleeves. The axial force borne by the output shaft of the motor will be exerted to the shaft sleeves. The shaft sleeves are fixed by the adhesive, which improves the reliability of the motor in resisting axial impact force, avoids encoder failure caused by an axial position, and enhances the reliability of the motor.

The foregoing descriptions are merely the specific embodiments of the present invention, but the protection scope of the present invention is not limited to this. Any person skilled in the art, who is familiar with this technical field, can easily think of various equivalent modifications or substitutions within the technical scope disclosed in the present invention, and these modifications or substitutions should be incorporated in the protection scope of the present invention. Therefore, the protection scope of the present invention should be subjected to the protection scope of claims.

## Claims

1. A stepper motor, comprising a motor front end cover (2), a motor rear end cover (3), a motor stator core (6), a motor front rotor core (7), a motor rear rotor core (8), a motor front bearing (10), a motor rear bearing (11), a magnetic encoder magnet (15), and a motor shaft (16), wherein a magnetic encoder magnet base (14) for fixing the magnetic encoder magnet (15) is mounted at a rear end of the motor shaft (16), a wave washer (13) is disposed between the motor rear bearing (11) and the motor rear end cover (3), and the motor front bearing (10) is fixed by a step structure formed between the motor front end cover (2) and the motor shaft (16).

2. The stepper motor according to claim 1, wherein the motor shaft (16) is provided with a first screw thread, and the motor further comprises a first locknut (20) matched with the first screw thread, and an inner ring of the motor front bearing (10) is fixed onto the motor shaft (16) by the first locknut (20).

3. The stepper motor according to claim 2, wherein the first locknut (20) is fixed to the motor shaft (16) by a thread locking adhesive.

4. The stepper motor according to claim 1, wherein a second screw thread is provided in a bearing chamber of the motor front end cover (2), the motor further comprises a second locknut (21) matched with the second screw thread, and an outer ring of the motor front bearing (10) is fixed onto the motor front end cover (2) by the second locknut (21).

5. The stepper motor according to claim 4, wherein the second locknut (21) is fixed to the motor front end cover (2) by a thread locking adhesive.

6. The stepper motor according to claim 1, further comprising a first shaft sleeve (22), wherein an outer ring of the motor front bearing (10) is fixed to the motor front end cover (2) by the first shaft sleeve (22).

7. The stepper motor according to claim 6, wherein the first shaft sleeve (22) is fixed to the motor front end cover (2) by an adhesive.

8. The stepper motor according to claim 1, further comprising a second shaft sleeve (23), wherein an inner ring of the motor front bearing (10) is fixed to the motor shaft (16) by the second shaft sleeve (23).

9. The stepper motor according to claim 8, wherein the second shaft sleeve (23) is fixed to the motor shaft (16) by an adhesive.
